# EUROPÄISCHE PATENTSCHRIFT

(11) **EP 1 859 178 B1**
(45) Veröffentlichungstag und Bekanntmachung des Hinweises auf die Patenterteilung: **06.07.2011**
(21) Anmeldenummer: 06707334.6
(22) Anmeldetag: 28.02.2006
(51) Int. Cl.: F16D 65/12

(54) **BREMSSCHEIBE, INSBESONDERE FÜR EIN FAHRZEUG**
BRAKE-DISC, IN PARTICULAR FOR A VEHICLE
DISQUE DE FREIN NOTAMMENT DESTINE A UN VEHICULE

(30) Priorität: 03.03.2005 DE 102005009744
(43) Veröffentlichungstag der Anmeldung: 28.11.2007
(73) Patentinhaber: KNORR-BREMSE Systeme für Nutzfahrzeuge GmbH, 80809 München (DE)
(72) Erfinder: BAUMGARTNER, Johann, 85368 Moosburg (DE); PAHLE, Wolfgang, 83707 Bad Wiessee (DE); IRASCHKO, Johann, 85301 Schweitenkirchen (DE)
(74) Vertreter: Mattusch, Gundula
(86) Internationale Anmeldenummer: PCT/EP2006/001829
(87) Internationale Veröffentlichungsnummer: WO 2006/092270

(56) Entgegenhaltungen:
- DE-A1- 2 458 048
- DE-A1- 10 355 204
- FR-A- 2 807 484
- US-A1- 2003 136 614
- US-B1- 6 536 564
- PATENT ABSTRACTS OF JAPAN Bd. 2002, Nr. 06, 4. Juni 2002 (2002-06-04) -& JP 2002 048166 A (KAWASAKI HEAVY IND LTD), 15. Februar 2002 (2002-02-15)
- PATENT ABSTRACTS OF JAPAN Bd. 1997, Nr. 03, 31. März 1997 (1997-03-31) -& JP 08 312671 A (EXEDY CORP), 26. November 1996 (1996-11-26)

## Beschreibung

Die Erfindung betrifft eine Bremsscheibe, insbesondere für ein Fahrzeug, gemäß dem Oberbegriff des Anspruchs 1.

Bremsscheiben finden in vielen Anwendungsbereichen Verwendung. Insbesondere werden sie in Fahrzeugen eingesetzt, wobei sie in Nutzfahrzeugen einer besonderen Beanspruchung unterliegen.

Durch das reibende Anpressen der üblicherweise beidseitig an die Bremsscheibe angreifenden Bremsbeläge entsteht Reibungshitze, die zu einem Anstieg der Temperaturen in den Bremsbelägen und in der Bremsscheibe führt.

Da die Reibungswärme an der Bremsfläche entsteht, ergibt sich zur Mitte der Bremsscheibe hin ein Temperaturgefälle, das besonders bei sogenannten innenbelüfteten Bremsscheiben besonders ausgeprägt ist. Dabei gilt, je schneller die Wärme an der Bremsfläche entsteht, desto größer ist das Temperaturgefälle.

Die Temperaturunterschiede können sich aber auch direkt in der Bremsfläche ergeben, deren Ursache der inhomogene Kontakt der Reibflächen vom anliegenden Bremsbelag und der Bremsscheibe ist. Dabei entstehen an den Stellen mit hoher Flächenpressung höhere Temperaturen als an den Stellen mit geringerer Flächenpressung. Die Stellen unterschiedlicher Temperatur können durchaus sehr nahe beieinander liegen.

Diese unterschiedlichen Temperaturen bewirken hohe mechanische Spannungen in der Bremsscheibe, die durch unterschiedliche temperaturbedingte Materialausdehnungen hervorgerufen werden. In der Folge kann es zu Rissbildungen in der Bremsfläche kommen, die bei häufiger hoher thermischer Belastung im Extremfall sogar zu einem Reißen der Bremsscheibe führen.

Da die Temperaturerhöhung beim Bremsen sehr schnell erfolgt, kann sich keine homogene Wärmeverteilung einstellen. Dies ist sowohl in Quer- wie auch in Längsrichtung zur Bremsfläche der Fall. Partiell kommt es in der Bremsfläche durch die örtlich auftretende hohe Temperatur zu plastischen Verformungen. Beim Abkühlen der Bremsscheibe schrumpft das Material. Auf die zuvor plastisch verformten Stellen wirken nun hohe Zugspannungen, die durch die umgebenden, nicht plastisch verformten Stellen auf der Bremsfläche erzeugt werden. Diese Zugspannungen können größer sein als die Zugfestigkeit des Werkstoffs, was insbesondere dann zu den geschilderten Problemen der Rissbildung führt, wenn die Bremsscheiben, wie im Regelfall, aus Gusseisen hergestellt sind.

Um eine Kühlung zu erreichen, ist es aus der DE 23 08 256 A bekannt, die Reibfläche mit Rillen zu versehen, durch die verhindert wird, dass sich bei Nässe ein geschlossener Wasserfilm bildet.

Die Rillen weisen jedoch eine geringe Tiefe auf, die zwar zur Unterbrechung eines Wasserfilms ausreichend sind und aufgrund einer gebildeten größeren Oberfläche eine gewisse Verbesserung der Wärmeabfuhr bewirken, die jedoch nicht im Sinne von Dehnungsfugen fungieren, durch die das unterschiedliche Wärmeausdehnungsverhalten der Teilsegmente ausgeglichen werden könnte.

In diesem Sinne stellt sich auch eine aus der DE 195 12 934 A1 bekannte Bremsscheibe dar, bei der ebenfalls Rillen vorgesehen sind, die der Kühlung und Unterbrechung eines Wasserfilms dienen.

Als Vorteil wird dabei herausgestellt, dass die Tiefe der Rillen der Dicke der Reibfläche entspricht, so dass nach Abnutzung dieser Reibfläche die Rillen nicht mehr als solche erkennbar sind und die Bremsscheibe insgesamt ausgetauscht werden muss.

Nachteilig bei den bekannten Bremsscheiben ist jedoch, dass die Ausdehnung der mit Reibungswärme beaufschlagten Teilsegmente sich bis in den Kernbereich der Bremsscheibe erstreckt, also bis in einen Bereich über die maximal nutzbare Dicke der Reibfläche hinaus.

Hierdurch kann es zu den beschriebenen Materialverformungen kommen, mit der Folge der Rissbildung.

Aus der DE 24 58 048 A1 ist eine innenbelüftete Bremsscheibe bekannt, deren Reibflächen mit sich radial erstreckenden, im Querschnitt keilförmigen Rillen versehen sind, die im Bereich einer sich zwischen zwei Kühlkanälen erstreckenden inneren Kühlkanalwand angeordnet sind und durch die Wärmespannungen abgebaut und die Rissgefahr der Bremsscheibe vermindert werden sollen.

In der US 6 536 564 B1 ist eine Bremsscheibe gemäß dem Oberbegriff des Anspruchs 1 gezeigt und beschrieben, deren Reibflächen durch radial sich erstreckende Strömungskanäle zerfurcht ist, um eine effektivere Luftströmung, mit der ein Teil der Wärme absorbiert wird, zu erreichen.

Der vorliegenden Erfindung liegt die Aufgabe zugrunde, eine Bremsscheibe der gattungsgemäßen Art so weiterzuentwickeln, dass ihre Standzeit mit konstruktiv geringem Aufwand wesentlich verbessert wird.

Diese Aufgabe wird durch eine Bremsscheibe gelöst, die die Merkmale des Anspruchs 1 aufweist.

Durch diese konstruktive Ausbildung kann sich jedes Teilsegment parallel der Bremsfläche in alle Richtungen ungehindert ausdehnen und zwar nicht nur inner halb der Tiefe, die durch das zulässige Verschleißmaß der Reibfläche bestimmt wird, sondern darüber hinaus bis in den Kernbereich hinein. Die beschriebenen, plastischen Verformungen werden damit vermieden. Voraussetzung hierfür ist allerdings, dass die Teilsegmente jeweils entsprechend klein dimensioniert sind.

Nach einer vorteilhaften Weiterbildung der Erfindung ist diesbezüglich vorgesehen, dass die Teilsegmente im Querschnitt schlank gehalten sind, d.h., die Querschnittsflächen sind relativ schmal bei relativ großer Höhe, wodurch sich ein recht großes Widerstandsmoment ergibt, so dass sich auftretende Biegebeanspruchungen der Bremsscheibe nur in geringem Maße auswirken. Möglicherweise in den Reibflächen der Teilsegmente entstehende Wärmerisse werden somit nicht durch hohe mechanische Spannungen zusätzlich vergrößert. Darüber hinaus ist das Risswachstum durch die Querschnittskontur des jeweiligen Teilsegmentes begrenzt. Ein in dem Teilsegment entstandener Wärmeriss kann sich nicht über dessen Kontur hinaus ausbreiten.

Nach der Erfindung sind die Dehnungsfugen und somit die Teilsegmente zur Erzielung eines gleichmäßigen Verschleißverhaltens von Bremsscheibe und Bremsbelägen so gestaltet, dass auf beliebigen Umfangslinien der Bremsscheibe gleiche Verhältnisse von Dehnungsfuge- zu Teilsegment-Breite vorliegen.

Einem z.B. durch Geometrie und Materialeigenschaften des Bremsbelages bedingten systematischen Ungleichverschleiß der Bremsscheibe kann durch eine entsprechende partielle Veränderung der genannten Verhältnisse von Dehnungsfuge - zu Teilsegment-Breite entgegengewirkt werden. Eine Vergrößerung der Dehnungsfuge führt zu einer Verringerung der Teilsegment-Breite, was zu einer Erhöhung des Bremsscheibenverschleißes führt. Entsprechend wird bei einer Vergrößerung der Teilsegment-Breite der Bremsscheibenverschleiß reduziert.

Neben der Minimierung der Gefahr von Hitzerissen wird durch die Erfindung auch ein günstigeres Temperaturverhalten erreicht, wobei die Bremsfläche durch die Wandungen der Dehnungsfugen eine größere Oberfläche aufweisen, durch die mittels Konvektion Wärme direkt an die Umgebung abgegeben wird.

Nach der Erfindung ist vorgesehen, dass die Tiefe der Dehnungsfugen das 1,5 bis 2-fache des zulässigen Verschleißmaßes beträgt. Bei einer Verschleißtiefe von beispielsweise 4 mm ist demnach die Tiefe der Dehnungsfugen etwa 6 - 8 mm.

Da durch die konstruktive Verbesserung der Bremsscheibe prinzipiell die Gefahr einer Rissbildung minimiert wird, sind die Anforderungen an die Wärmeleitfähigkeit und Warmfestigkeit des Bremsscheibenwerkstoffes ebenfalls reduziert, wodurch sich eine größere Auswahl an verwendungsfähigen Werkstoffen ergibt.

Auch hinsichtlich der Entwicklung von Bremsbelägen stellt die Erfindung eine wesentliche Verbesserung dar, da auf das Reißverhalten der Bremsscheibe nunmehr im geringeren Maße Rücksicht genommen werden muss. Dies schließt die Wahl der Belagqualitäten ein, da diese in größerem Umfang mit der neuen Bremsscheibe kompatibel sind.

Die Herstellung der neuen Bremsscheibe kann gegenüber der bekannten zumindest kostenneutral erfolgen, da lediglich eine entsprechende Gestaltung des Gussmodells erforderlich ist, wobei eine mechanische Bearbeitung unterbleiben kann.

Die Grundrissform der Teilsegmente und damit der Verlauf und die Anordnung der Dehnungsfugen kann unterschiedlich sein. So können die Teilsegmente noppenartig in konzentrischen Kreisen verteilt ausgebildet sein, wobei die Grundrisskontur jedes Teilsegmentes rund, trapezförmig, rautenförmig, polygon oder in einer anderen geometrischen Form vorliegen kann. Dabei kann die Formgebung der Teilsegmente bestimmt sein von einer Optimierung der Kühlleistung oder von einer Optimierung der Herstellung. Denkbar ist auch, verschiedene Grundrissformen der Teilsegmente auf jeder Seite der Bremsscheibe zu kombinieren.

Die erfindungsgemäße Bremsscheibe kann in allen üblichen Ausführungsformen hergestellt werden, z.B. als sogenannten Hals- oder Topfscheibe, als Verbundguss-Bremsscheibe sowie als eine ebene Bremsscheibe.

Bei der letzteren Bauart bietet sich eine besonders rationelle Herstellung des Gussrohteils im sogenannten Stapelguss-Verfahren an. Hierbei werden mindestens zwei, vorzugsweise jedoch mehrere Bremsscheiben übereinander liegend hergestellt. Dabei liegt zwischen den Bremsscheiben jeweils eine Trennplatte aus Formstoff, die auch die Dehnungsfugenprofilierung in der Reibfläche beinhaltet. Mehrere Bremsscheiben werden hierbei wie in einer Säule übereinander gestapelt in einem einzigen Gieß-Arbeitsgang hergestellt.

Durch eine geeignete Gestaltung sowie Materialwahl der Formstoff-Trennplatten lässt sich eine schnellere Abkühlung der außen liegenden Teilsegmente gegenüber dem Bremsscheibenkern erreichen. Hierdurch können die Materialeigenschaften der Reibflächen einerseits und des Bremsscheibenkerns andererseits besonders beanspruchungsgerecht optimiert werden. Der Bremsscheibenkern bleibt duktil und behält eine hohe Zähigkeit zur Erfüllung der gestellten mechanischen Anforderungen. Die Reibflächen der Teilsegmente hingegen werden hart und besonders verschleißfest, ohne Nachteile für die mechanische Belastbarkeit.

Die Erfindung bietet vor allem dann große Vorteile, wenn die Bremsscheibe aus einem keramischen Werkstoff besteht, der naturgemäß eine relativ schlechte Wärmeleitfähigkeit besitzt, wobei eine Innenbelüftung nur mit einem erheblichen, für ein Serienprodukt unakzeptablen Fertigungsaufwand zu realisieren ist.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figuren 1, 3, 4 und 5: jeweils ein Ausführungsbeispiel einer erfindungsgemä- ßen Bremsscheibe in einer Draufsicht
- Figur 2: einen Teilausschnitt der Bremsscheibe nach Figur 1 in einer Querschnittsdarstellung

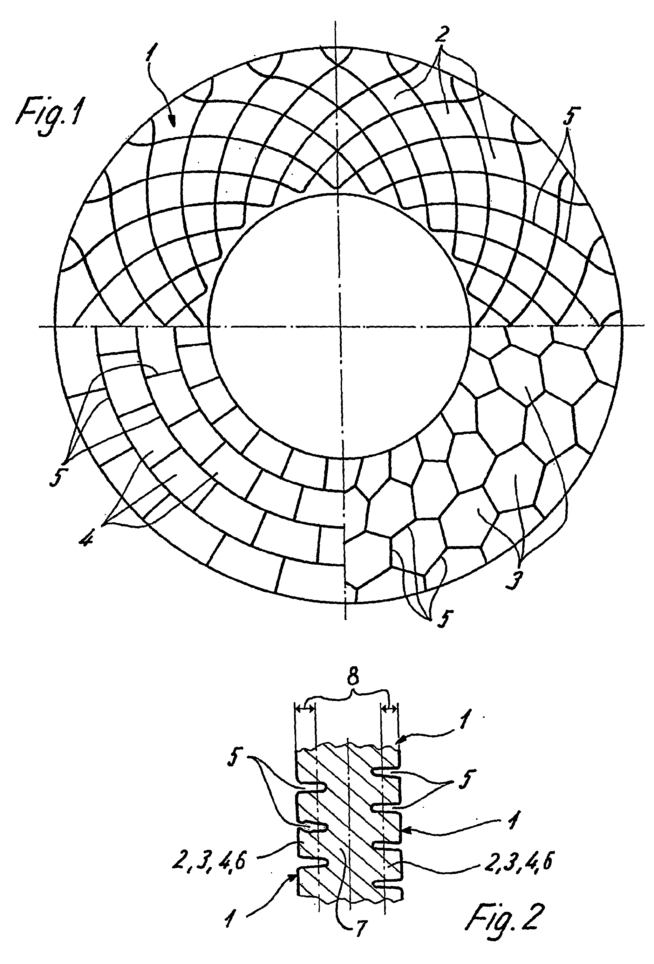

In den Figuren 1, 3, 4 und 5 ist jeweils eine Bremsscheibe, insbesondere für ein Fahrzeug dargestellt, die beidseitig eine ringförmige Reibfläche 1 aufweist (Figur 2), an die zum Bremsen ein nicht dargestellter Bremsbelag andrückbar ist.

In den vorliegenden Ausführungsbeispielen sind die beiden Reibflächen 1 durch einen durchgehenden Bremsscheibenkern 7 miteinander verbunden, so dass die Bremsscheibe einstückig ist. Grundsätzlich, aber nicht gemäß der Erfindung, besteht auch die Möglichkeit, die Bremsscheibe mit zwei thermisch voneinander getrennten Reibflächen 1 zu versehen, wobei dann die innenbelüftete Bremsscheibe zwischen den beiden Reibflächen 1 mit Kühlkanälen versehen ist.

Die Reibfläche 1 weist eine Vielzahl von zumindest teilweise stofflich voneinander getrennten Teilsegmenten 2, 3, 4, 5 auf, die, wie die Figuren 1, 3, 4, 5 bildlich zeigen, in ihrer Konturierung unterschiedlich sein können.

Die obere Hälfte der in der Figur 1 gezeigten Bremsscheibe zeigt Teilsegmente 2, die eine im weitesten Sinn rombusförmige Kontur aufweisen und jeweils durch Dehnungsfugen 5 getrennt sind.

In der Figur 1 im linken unteren Viertelkreis sind Teilsegmente 4 im Grundriss kachelförmig ausgebildet, während Teilsegmente 3 im rechten unteren Viertelkreis wabenförmig gestaltet sind.

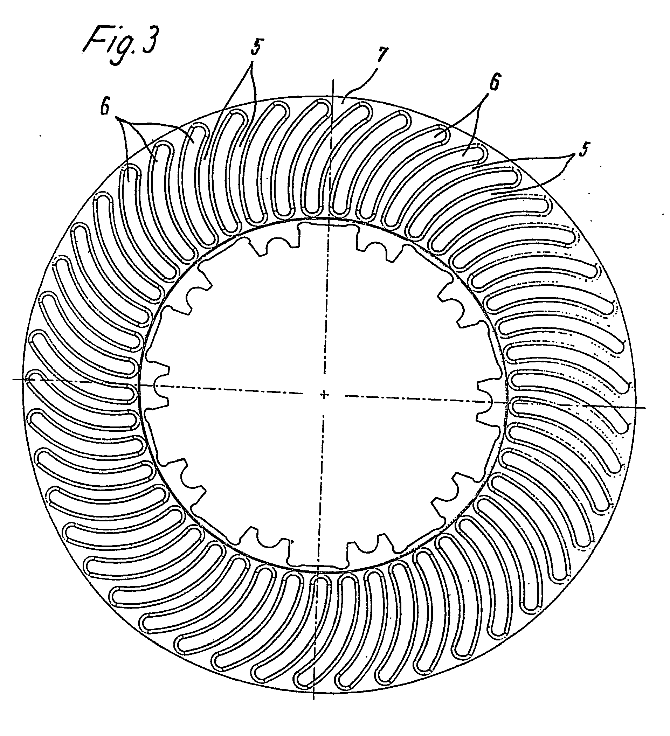

Im Ausführungsbeispiel gemäß der Figur 3 verlaufen die Dehnungsfugen 5 ebenso wie die Teilsegmente 6 gleichmäßig verteilt etwa radial und sichelförmig, wobei alle Teilsegmente 6 in Form und Abmaß gleich sind, ebenso wie alle Dehnungsfugen 5.

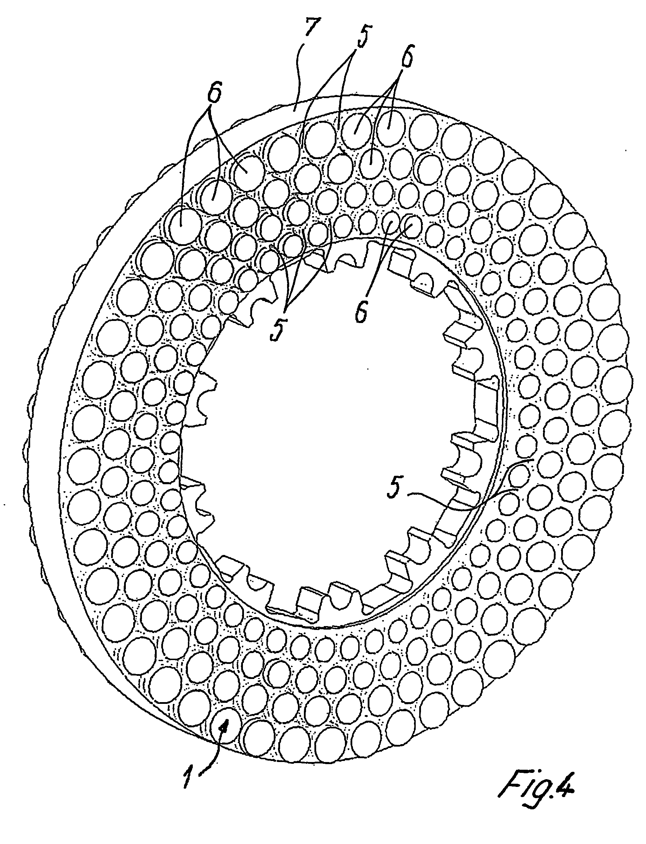

Bei dem in der Figur 4 gezeigten Beispiel sind die Teilsegmente 6 im Grundriss rund und noppenartig ausgebildet. Dabei werden die Dehnungsfugen 5 durch die Abstände zwischen den einzelnen Teilsegmenten 6 gebildet.

Diese noppenartigen Teilsegmente 5 sind in mehreren konzentrischen Kreisen angeordnet, wobei die Teilsegmente 5 jeweils eines Kreises gleich sind von außen nach innen, aber in ihrem Durchmesser kleiner werden.

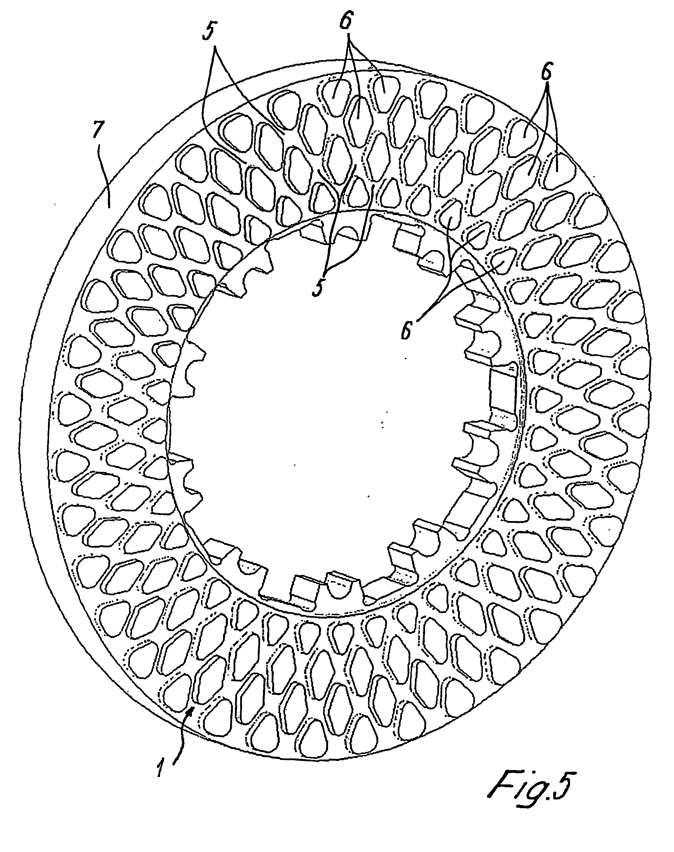

In der Figur 5 sind die Teilsegmente 6 in ihrem Grundriss zum Teil dreieck- und zum Teil rautenförmig gestaltet, jedoch immer abständig zueinander, wobei die Abstände die Dehnungsfugen 5 definieren.

Anstelle der hier gezeigten, lediglich beispielhaft zu sehenden Grundrisse, sind auch andere Grundrissformen der Teilsegmente denkbar, beispielsweise ellipsenförmige oder polygone. In jedem Fall bilden die stollenartig vorstehenden Teilsegmente in ihrer Gesamtheit eine insoweit plane Reibfläche.

Wie insbesondere Figur 2 sehr deutlich zeigt, sind die die Teilsegmente 2, 3, 4, 6 seitlich begrenzenden Dehnungsfugen 5 beidseitig so weit in die Bremsscheibe eingefügt, dass im Mittenbereich ein umfänglich durchgehender Kern 7 verbleibt.

Erfindungsgemäß ist die Tiefe der Dehnungsfugen 5 größer als das zulässige Verschleißmaß der Reibfläche 1, das mit dem Bezugszeichen 8 versehen ist.

Erfindungsgemäß beträgt die Tiefe der Dehnungsfugen 5 etwa das 1,5 bis 2-fache des Verschleißmaßes 8.

Die Breite der Dehnungsfugen 5 ist so bemessen, dass eine ausreichende Lüftung zur Kühlung der Teilsegmente 2, 3, 4, 6 gewährleistet ist.

## Patentansprüche

1. Bremsscheibe für ein Nutzfahrzeug, mit an beiden Außenseiten vorgesehenen, ringförmigen Reibflächen (1), an die zum Bremsen jeweils ein Bremsbelag andrückbar ist, wobei die Reibflächen (1) aus einer Vielzahl von durch Dehnungsfugen (5) zumindest teilweise stofflich voneinander getrennten Teilsegmenten (2, 3, 4, 6) bestehen, die Tiefe der Dehnungsfugen (5) etwa das 1,5 bis 2-fache des zulässigen Verschleißmaßes der Reibflächen (1) beträgt, **dadurch gekennzeichnet, dass** die Verhältnisse von Dehnungsfugen- zu Teilsegment-Breite auf beliebigen Umfangslinien der Bremsscheibe gleich sind, wobei zwischen den beidseitigen Reibflächen (1) ein umfänglich gleichmäßig durchgehender Bremsscheibenkern (7) ausgebildet ist.

2. Bremsscheibe nach Anspruch 1, **dadurch gekennzeichnet, dass** die Teilsegmente (2, 3, 4, 6) im Querschnitt schlank ausgebildet sind.

3. Bremsscheibe nach einem der vorhergehenden Ansprüche, **dadurch gekennzeichnet, dass** die Teilsegmente (2, 3, 4, 6) in ihrem Grundriss etwa rautenförmig ausgebildet sind.

4. Bremsscheibe nach einem der vorhergehenden Ansprüche, **dadurch gekennzeichnet, dass** die Teilsegmente (3) in ihrem Grundriss wabenförmig ausgebildet sind.

5. Bremsscheibe nach einem der vorhergehenden Ansprüche, **dadurch gekennzeichnet, dass** die Teilsegmente (4) kachelartig ausgebildet sind.

6. Bremsscheibe nach einem der vorhergehenden Ansprüche, **dadurch gekennzeichnet, dass** die Teilsegmente planeben und in ihrer Höhe fluchtend zueinander ausgebildet sind.

7. Bremsscheibe nach einem der vorhergehenden Ansprüche, **dadurch gekennzeichnet, dass** die Dehnungsfugen (5) in ihrer Breite so bemessen sind, dass eine ausreichende Lüftung gegeben ist.

8. Bremsscheibe nach einem der vorhergehenden Ansprüche, **dadurch gekennzeichnet, dass** bei beidseitiger Anordnung von Teilsegmenten (2, 3, 4) die Dehnungsfugen (5) in ihrer Tiefe so bemessen sind, dass sie abständig zu den gegenüber liegenden Dehnungsfugen (5) enden.

9. Bremsscheibe nach einem der vorhergehenden Ansprüche, **dadurch gekennzeichnet, dass** diese aus einem Gussmaterial, vorzugsweise Gusseisen besteht.

10. Bremsscheibe nach einem der vorhergehenden Ansprüche, **dadurch gekennzeichnet, dass** die Teilsegmente (6) stollenartig ausgebildet sind.

11. Bremsscheibe nach einem der vorhergehenden Ansprüche, **dadurch gekennzeichnet, dass** die Teilsegmente (6) bzw. die angrenzenden Dehnungsfugen (5) etwa radial sich erstreckend sichelförmig ausgebildet sind.

12. Bremsscheibe nach einem der vorhergehenden Ansprüche, **dadurch gekennzeichnet, dass** alle Teilsegmente (6) bzw. alle Dehnungsfugen (5) in Kontur und Abmaß gleich sind.

13. Bremsscheibe nach einem der vorhergehenden Ansprüche, **dadurch gekennzeichnet, dass** die Teilsegmente (6) zylinderförmig ausgebildet sind.

14. Bremsscheibe nach einem der vorhergehenden Ansprüche, **dadurch gekennzeichnet, dass** die zylinderförmigen Teilsegmente (6) in konzentrischen Kreisen angeordnet sind.

15. Bremsscheibe nach einem der vorhergehenden Ansprüche, **dadurch gekennzeichnet, dass** die zylinderförmigen Teilsegmente (6) jedes konzentrischen Kreises in ihrem Durchmesser gleich groß sind.

16. Bremsscheibe nach einem der vorhergehenden Ansprüche, **dadurch gekennzeichnet, dass** die zylinderförmigen Teilsegmente (6) jedes konzentrischen Kreises gegenüber denen des benachbarten konzentrischen Kreises unterschiedlich sind, vorzugsweise von außen nach innen abnehmend.

17. Bremsscheibe nach einem der vorhergehenden Ansprüche, **dadurch gekennzeichnet, dass** die Teilsegmente (6) einen elliptischen, dreieckförmigen oder polygonen Grundriss aufweisen.

18. Bremsscheibe nach einem der vorhergehenden Ansprüche, **dadurch gekennzeichnet, dass** diese als Hals- oder Topfscheibe, als Verbundguss-Bremsscheibe oder als ebene Bremsscheibe ausgebildet ist.

19. Verfahren zur Herstellung einer Bremsscheibe gemäß dem Anspruch 1, **dadurch gekennzeichnet, dass** diese als Gussrohteil im Stapelguss-Verfahren hergestellt wird, wobei mindestens zwei, vorzugsweise mehrere Bremsscheiben übereinander liegend hergestellt werden.

20. Verfahren nach Anspruch 19, **dadurch gekennzeichnet, dass** zwischen die zu gießenden Bremsscheiben jeweils eine Trennplatte aus einem Formstoff gelegt wird, die die Teilsegment- bzw. Dehnungsfugenprofilierung der Reibfläche (1) der Bremsscheibe aufweist.

## Claims

1. Brake disc for a commercial vehicle, comprising annular friction surfaces (1) provided on both outer sides, against which a respective brake liner may be pressed for braking, with said friction surfaces (1) consisting of a plurality of segment units (2, 3, 4, 6) physically separated from each other by expansion joints (5) at least in part, wherein the depth of said expansion joints (5) corresponds approximately to 1.5 to 2 times the admissible wear measure of said friction surfaces (1), **characterized in that** the ratios of the width of said expansion joints to the width of said segment units are equal on any peripheral lines of the brake disc, with a peripherally uniformly continuous brake disc core (7) being formed between said friction surfaces (1) on both sides.

2. Brake disc according to Claim 1, **characterized in that** said segment units (2, 3, 4, 6) present a slim configuration in their cross-section.

3. Brake disc according to any of the preceding Claims, **characterized in that** said segment units (2, 3, 4, 6) present an approximately lozenge-shaped configuration in their horizontal projection.

4. Brake disc according to any of the preceding Claims, **characterized in that** said segment units (3) present a honeycomb-shaped configuration in their horizontal projection.

5. Brake disc according to any of the preceding Claims, **characterized in that** said segment units (4) present a tile-shaped configuration.

6. Brake disc according to any of the preceding Claims, **characterized in that** said segment units present a planar configuration with alignment relative to each other in their height.

7. Brake disc according to any of the preceding Claims, **characterized in that** said expansion joints (5) have a width so dimensioned that sufficient ventilation is ensured.

8. Brake disc according to any of the preceding Claims, **characterized in that** with arrangement of segment units (2, 3, 4) on both sides, said expansion joints (5) have a depth so dimensioned that they terminate at a spacing from the opposite expansion joints (5).

9. Brake disc according to any of the preceding Claims, **characterized in that** it is made of a cast material, preferably cast iron.

10. Brake disc according to any of the preceding Claims, **characterized in that** said segment units (6) present a cleat-type configuration.

11. Brake disc according to any of the preceding Claims, **characterized in that** said segment units (6) or said adjacent expansion joints (5) present, respectively, a sickle-shaped configuration with approximately radial extension.

12. Brake disc according to any of the preceding Claims, **characterized in that** all segment units (6) or all expansion joints (5), respectively, are equal in terms of contour and dimensions.

13. Brake disc according to any of the preceding Claims, **characterized in that** said segment units (6) present a cylindrical configuration.

14. Brake disc according to any of the preceding Claims, **characterized in that** said cylindrical segment units (6) are disposed in concentric circles.

15. Brake disc according to any of the preceding Claims, **characterized in that** said cylindrical segment units (6) of each concentric circle are of equal size in terms of their diameter.

16. Brake disc according to any of the preceding Claims, **characterized in that** said cylindrical segment units (6) of each concentric circle are different from those of the adjacent concentric circle, preferably with a reduction from the outside towards the inside.

17. Brake disc according to any of the preceding Claims, **characterized in that** said segment units (6) present an elliptic, triangular or polygon horizontal projection.

18. Brake disc according to any of the preceding Claims, **characterized in that** it is configured as neck or pot-type disc, as compound cast disc or a planar brake disc.

19. Method of manufacturing a brake disc according to Claim 1, **characterized in that** the disc is produced as cast blank in a stack moulding process, with at least two, preferably several, brake discs being manufactured in superimposed position.

20. Method according to Claim 19, **characterized in that** a respective parting plate made of a moulding material is placed between the brake discs to be cast, which presents the profiles of said segment units or expansion joints, respectively, of the friction surface (1) of the brake disc.

## Revendications

1. Disque de frein pour un véhicule utilitaire, comprenant des surfaces de frottement (1) annulaires prévues des deux côtés extérieurs, contre lesquelles on peut presser une garniture de frein respective pour une opération de freinage, auxdites surfaces de frottement (1) étant formées par une pluralité de segments composants (2, 3, 4, 6) séparés physiquement l'un de l'autre par des joints de dilatation (5) au moins en partie, dans lequel la profondeur desdits joints de dilatation (5) corresponde environ à 1,5 à 2 fois la mesure d'usure acceptable desdites surfaces de frottement (1), **caractérisé en ce que** les rapports entre la largeur desdits joints de dilatation et la largeur desdits segments composants sont égaux sur toutes les lignes périphériques du disque de frein, à un noyau également en continu en sens périphérique du disque de frein (7) étant formé entre lesdites surfaces de frottement (1) des deux côtés.

2. Disque de frein selon la revendication 1, **caractérisé en ce que** lesdits segments composants (2, 3, 4, 6) présentent une configuration svelte en leurs coupes transversales.

3. Disque de frein selon une quelconque des revendications précédentes, **caractérisé en ce que** lesdits segments composants (2, 3, 4, 6) présentent une configuration sous forme de losange environ dans leur projection horizontale.

4. Disque de frein selon une quelconque des revendications précédentes, **caractérisé en ce que** lesdits segments composants (3) présentent une configuration sous forme de nid d'abeilles dans leur projection horizontale.

5. Disque de frein selon une quelconque des revendications précédentes, **caractérisé en ce que** lesdits segments composants (4) présentent une configuration sous forme de carreaux de céramique.

6. Disque de frein selon une quelconque des revendications précédentes, **caractérisé en ce que** lesdits segments composants présentent une configuration planaire en alignement l'un relativement à l'autre le long de leur hauteur.

7. Disque de frein selon une quelconque des revendications précédentes, **caractérisé en ce que** lesdits joints de dilatation (5) ont une largeur si dimensionnée qu'une ventilation suffisante soit achevée.

8. Disque de frein selon une quelconque des revendications précédentes, **caractérisé en ce qu'**à un arrangement des segments composants (2, 3, 4) des deux côtés, lesdits joints de dilatation (5) présentent une profondeur si dimensionnée qu'ils se terminent à un écart des joints de dilatation (5) opposes.

9. Disque de frein selon une quelconque des revendications précédentes, **caractérisé en ce qu'**il est produit d'un matériau de fonte, de préférence de fonte de fer.

10. Disque de frein selon une quelconque des revendications précédentes, **caractérisé en ce que** lesdits segments composants (6) présentent une configuration du type de barrette.

11. Disque de frein selon une quelconque des revendications précédentes, **caractérisé en ce que** lesdits segments composants (6) ou respectivement lesdits joints de dilatation (5) avoisinants présentent une configuration en faucille à étendue radiale environ.

12. Disque de frein selon une quelconque des revendications précédentes, **caractérisé en ce que** tous les segments composants (6) ou respectivement tous les joints de dilatation (5) sont égaux en contour et dimensions.

13. Disque de frein selon une quelconque des revendications précédentes, **caractérisé en ce que** lesdits segments composants (6) présentent une configuration cylindrique.

14. Disque de frein selon une quelconque des revendications précédentes, **caractérisé en ce que** lesdits segments composants (6) cylindriques sont disposes en cercles concentriques.

15. Disque de frein selon une quelconque des revendications précédentes, **caractérisé en ce que** lesdits segments composants (6) cylindriques de chaque cercle concentrique ont la même taille en leur diamètre.

16. Disque de frein selon une quelconque des revendications précédentes, **caractérisé en ce que** lesdits segments composants (6) cylindriques de chaque cercle concentrique sont différents de ceux du cercle concentrique avoisinant, de préférence à une réduction de l'extérieur vers l'intérieur.

17. Disque de frein selon une quelconque des revendications précédentes, **caractérisé en ce que** lesdits segments composants (6) présentent une projection horizontale elliptique, triangulaire ou polygone.

18. Disque de frein selon une quelconque des revendications précédentes, **caractérisé en ce qu'**il est configure sous forme d'un disque à cou ou du type de pot, en tant que disque en fonte composite ou sous forme d'un disque de frein planaire.

19. Procédé de fabriquer un disque de frein selon la revendication 1, **caractérisé en ce que** le disque est produit sous forme d'une pièce métallique brute de coulée en un processus de coulée en grappe, à au moins deux, de préférence plusieurs, disques de frein étant fabriqué en position superposée.

20. Procédé selon la revendication 19, **caractérisé en ce qu'**une plaque de séparation respective en un matériau de moulage est placée entre les disques de frein à couler, qui présente le profilage desdits segments composants ou respectivement des joints de dilatation de la surface de frottement (1) du disque de frein.
